# EUROPEAN PATENT SPECIFICATION

(11) **EP 1 203 634 B1**
(45) Date of publication and mention of the grant of the patent: **16.08.2006**
(21) Application number: 00830727.4
(22) Date of filing: 02.11.2000
(51) Int. Cl.: B23Q 39/04, B23Q 1/76

(54) **Transfer type machine tool**
Werkzeugmaschine mit Rundschalttisch
Machine outil de transfert

(43) Date of publication of application: 08.05.2002
(73) Proprietor: IEMCA Giuliani Macchine Italia S.p.A., 48018 Faenza (Ravenna) (IT)
(72) Inventor: Dellamore, Edo, 40050 Monte San Pietro (Bologna) (IT)
(74) Representative: Lanzoni, Luciano

(56) References cited:
- EP-A- 0 371 450
- EP-A- 0 936 027
- DE-A- 1 477 691
- US-A- 3 793 707
- US-A- 3 926 447
- US-A- 4 058 035
- US-A- 5 778 504
- US-A- 5 832 590
- US-A- 5 918 514

## Description

The present invention has for an object a machine tool of the transfer type.

The invention relates in particular to a machine tool of the transfer type equipped with a rotary table where the workpieces to be subjected to different machine processes are carried by the rotary table to a plurality of machining stations where they are machined by specific operating units.

As is known, machine tools of this type have a base designed to support the operating units, which are mounted around the rotary table. The workpieces are carried by the rotary table to the machining stations where they are subjected to different machining processes in ordered succession.

Looking in more detail, each workpiece is secured by a gripping element mounted on the rotary table. Usually, the gripping elements consist of clamps mounted at the edge of the rotary table.

There are preferably as many gripping elements as there are machining stations, so that all the workpieces can be machined simultaneously.

In particular, the workpieces consist of parts cut off from bars. The cutting off operation is performed outside the transfer machine using appropriate cutting means, such as a circular saw for example, which cuts the bar to make the required workpieces.

The first machining station is a loading station where the workpiece is positioned on the gripping element.

The workpiece then passes through the subsequent machining stations, each of which is designed to perform a specific operation on it. After being machined, the workpiece is conveyed to an unloading station where the clamp releases it.

The operating units located at the machining stations differ according to the type of operations they perform on the workpiece. For example, some operating units are equipped with drills to make holes in the workpiece, others with cutting tools to cut out parts of the workpiece.

EP 0 936 027 shows a machine tool of the transfer type comprising a rotary turret that turns about an axis, whose rotational motion forms a machining path, and which is provided, on its edge, of a plurality of gripping elements holding at least one workpiece.

A plurality of machining stations is located on the machining path, at least one of said stations being a loading station where the workpiece is clamped by one of said gripping elements.

The machine tool further comprises a unit for feeding a bar and carrying a machinable end of the bar to the loading station, one lathe used to machine said end of the bar and one cutting off tool, located at the loading station, for cutting said end from the bar to make the workpiece.

DE 14 77 691 discloses a machine tool of the transfer type comprising a rotary unit that turns about an axis and whose rotational motion forms a machining path; a plurality of gripping elements holding at least one workpiece, said gripping elements being mounted at the edge of the rotary unit; a plurality of machining stations located on the machining path, at least one of these machining stations being a loading station where the workpiece is clamped by one of the gripping elements; a unit for feeding at least on bar having at least one machinable end, said unit carrying the machinable end to the loading station; at least one lathe for machining said end of the bar and at least one cutting off tool located at the loading station to cut the end from the bar in order to make said workpiece, from the bar.

Machine tools of this type have several disadvantages.

Those are mainly due to the fact that all these different machines occupy a large amount of working space.

In this situation, the technical target which the present invention aims to achieve is a transfer type machine tool of new design.

In particular, it is an important aim of the present invention to provide a transfer type machine tool that is capable to reduce production costs and required working space compared to the plurality of machines needed up to now to perform the same cycle.

These and other aims are accomplished by a machine tool of the transfer type as described in the accompanying claims.

Further characteristics and advantages of the invention will emerge from the detailed description which follows, with reference to the accompanying drawings which illustrate preferred embodiments of the invention without restricting the scope of the inventive concept, and in which:
- Figure 1 is a plan view, partly in cross section and with some parts cut away, of a machine tool of the transfer type according to the present invention;
- Figure 2 is a side elevation view, with some parts cut away, of the machine tool shown in Figure 1;
- Figure 3 is an elevation view of a machining station forming part of the machine tool shown in Figure 1;
- Figure 4 is a section view of a part of the machining station shown in Figure 3;
- Figure 5 is an enlarged view of a detail from Figure 4;
- Figure 6 is an elevation view of a mounting unit applicable to the machining station illustrated in Figure 3;
- Figure 7 is a scaled-up section view of a detail from Figure 3;
- Figure 8 is an enlarged view of a detail from Figure 3, in another embodiment of the invention;
- Figure 9 is an elevation view of another embodiment of the machining station illustrated in Figure 3.

With reference to the accompanying drawings, the numeral 1 denotes in its entirety a machine tool of the transfer type.

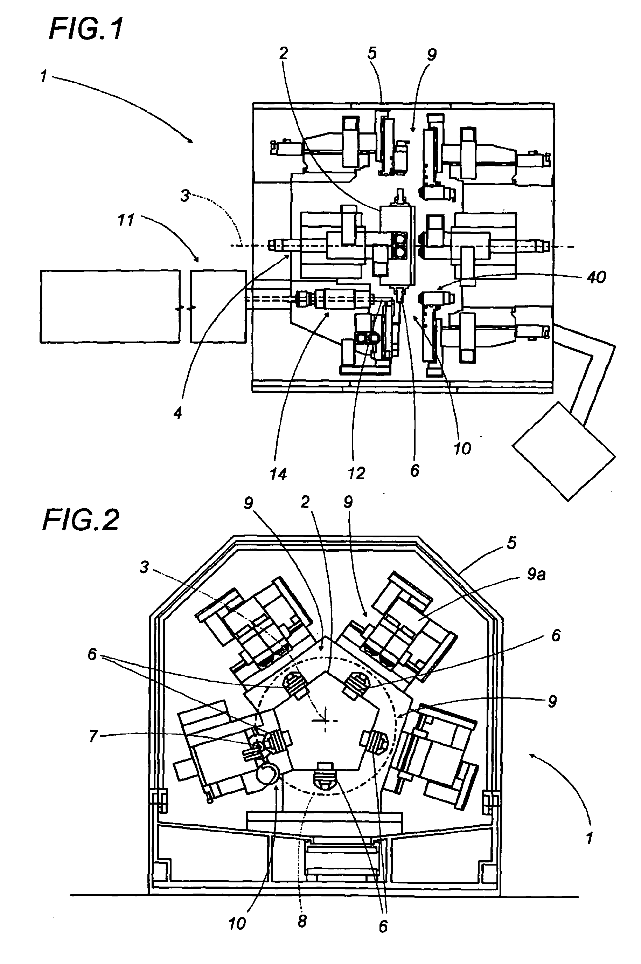

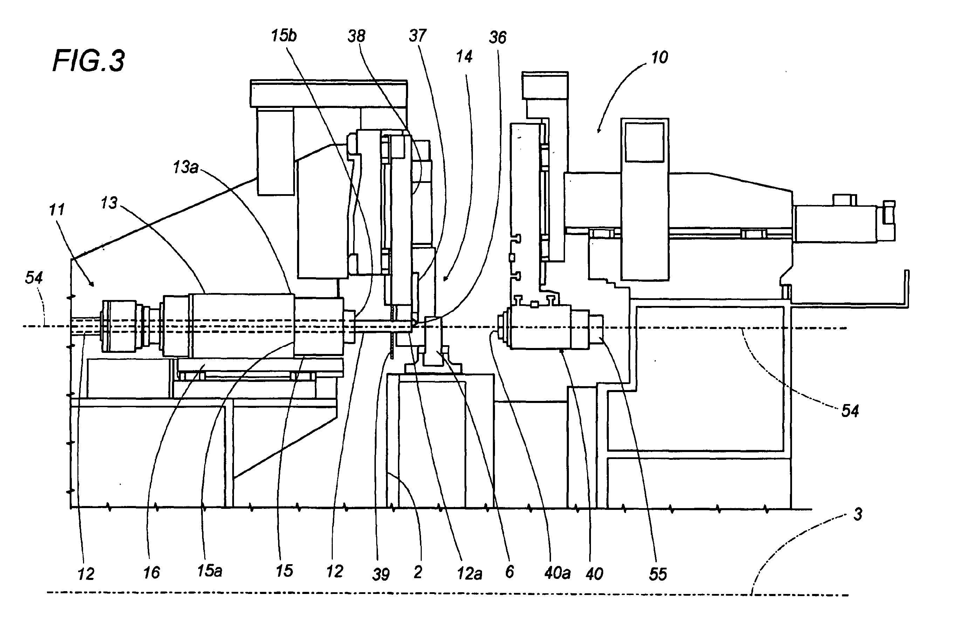

In particular, the machine 1 comprises a rotary unit 2 that rotates about an axis 3 (see Figures 1 and 3). The rotary unit 2 is coupled to a motor 4 which is in turn mounted on a frame 5 of the machine tool 1. Preferably, the rotary unit 2 is in the form of a table and the axis of rotation 3 is parallel to the ground.

Advantageously, the rotary unit 2 is substantially pentagonal in shape and has a plurality of gripping elements 6 mounted at its edge, each holding at least one workpiece 7.

Looking in more detail, each portion of the edge of the rotary unit 2, corresponding to one side of the pentagon, has a gripping element 6. Advantageously, the number of gripping elements 6 may vary according to the types of operation which the machine 1 has to perform or according to the shape of the rotary unit 2.

In the preferred embodiments illustrated in the accompanying drawings, there are five gripping elements 6 mounted on a pentagonal rotary unit 2.

Preferably, each gripping element 6 consists of a clamp designed to hold the workpiece 7.

As it rotates, the rotary unit 2 forms a substantially circular machining path 8, corresponding to the trajectory described by the workpieces 7 carried by the rotary unit 2.

There is a plurality of machining stations 9 arranged around the machining path 8 in a circle that is concentric with the machining path 8 itself.

The machining stations 9 comprise operating units 9a mounted on the frame 5, each designed to perform a specific operation on the workpiece 7.

Looking in more detail, at least one of these machining stations 9 is a loading station 10 where the workpiece 7 is clamped by one of the gripping elements 6.

The loading station 10 comprises a unit 11 for feeding at least one bar 12, this feed unit being only partly illustrated in Figure 3 and comprising a unit for gripping the bar 12.

The gripping unit has a tubular body 13 having at one end of it an outlet portion 13a from which the bar 12 protrudes. The bar 12 is in turn positioned inside the tubular body 13 according to the longitudinal axis of the body 13 itself.

Advantageously, the feed unit 11 comprises an automatic bar loader for lathes, which is of known type and therefore is not illustrated or described in further detail.

The bar 12 extends in a generally lengthways direction, while its cross section may have different shapes. Usually, the bar 12 is cylindrical with a substantially circular cross section.

Further, the bar 12 has at least one machinable end 12a, protruding from the outlet portion 13a from which the workpiece 7 is obtained.

The feed unit 11 is associated with at least cne lathe 14 that machines the end 12a of the bar 12.

The lathe 14 comprises a primary spindle 15, which is coaxial with the tubular body 13 of the bar 12 gripping unit, and at least one tool 36.

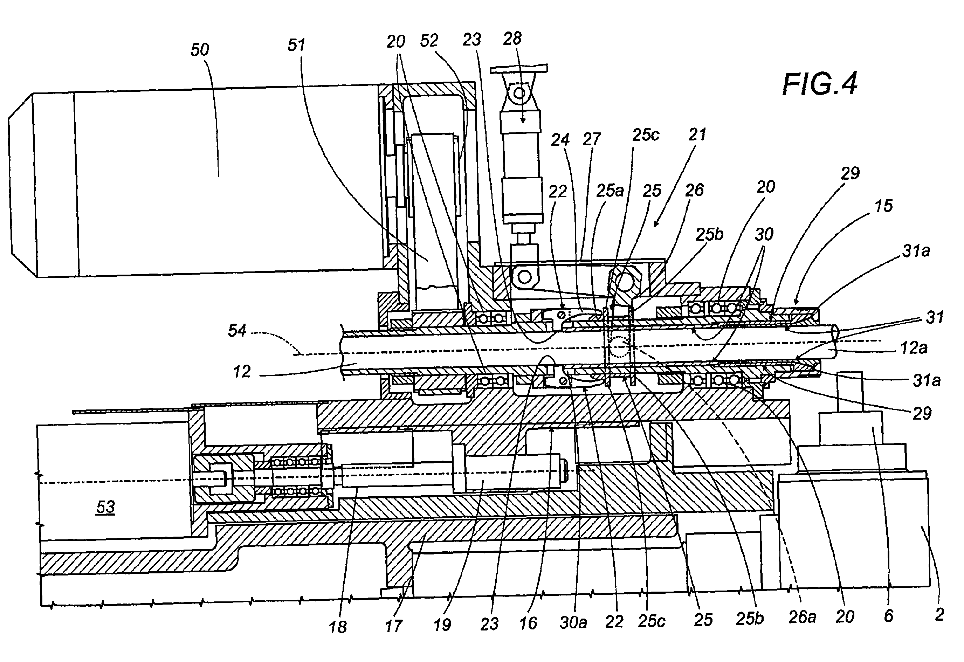

The primary spindle 15 is substantially tubular and has a first end 15a engaged with the outlet portion 13a of the tubular body 13, and a second end 15b opposite the first end 15a (see Figures 3 and 4).

The lathe 14 further comprises a motor 50 designed to drive the primary spindle 15.

A belt 51 connects the motor 50 shaft 52, which extends in a direction parallel to the longitudinal axis 54 of the primary spindle 15, to the outside surface of the primary spindle 15 at the first end 15a of the primary spindle 15 itself.

The bar 12 protruding from the gripping unit is fed by the feed unit 11 into the spindle 15 from a first feed position where the machinable end 12a is inside the primary spindle 15, to a second feed position where the machinable end 12a protrudes from the second end 15b of the primary spindle 15.

As shown in more detail in Figure 4, the spindle 15 is supported by a mounting unit 16 attached to the frame 17 of the lathe 14.

The mounting unit 16 can move in a direction parallel to the longitudinal axis 54 of the spindle 15 between a first position where the primary spindle 15 is close to the tool 36 of the lathe 14, and a second position where the primary spindle 15 is away from the tool 36.

Looking in more detail, there is a feed screw 18 extending from the frame 17 of the lathe 14. The feed screw 18 extends in a direction parallel to the longitudinal axis 54 of the primary spindle 15 and is rotated by a motor 53.

The screw 18 is inserted in an enlarged cylindrical portion 19 of the mounting unit 16. The enlarged portion 19 is internally threaded to match the threading of the screw 18 in such a way that the mounting unit 16 moves in a direction parallel to the longitudinal axis 54 when the screw 18 is turned.

Between the mounting unit 16 and the primary spindle 15 there is a plurality of bearings 20. The bearings 20 are designed to irremovably constrain the spindle 15 to the mounting unit 16 in the direction of movement of the mounting unit 16 on the screw 18, while allowing the spindle to rotate on the mounting unit 16.

The primary spindle 15 further comprises means 21 for gripping the bar 12, driven between a working, engaged condition where the bar 12 is locked to the primary spindle 15 and the machinable end 12a is in the second feed position, and a second idle, released condition where the bar 12 can slide inside the primary spindle 15.

The gripping means 21 comprise a plurality of engagement elements 22 pivoted to the spindle itself and positioned around its circumference. The engagement elements 22 have a contact portion 23 designed to stop against the outside surface of the bar 12 inside the spindle 15, and a rod-shaped control portion 24 located opposite the contact portion 23.

The control portion 24 is engaged to a ring-shaped slider 25 that moves in a direction parallel to the longitudinal axis 54 of the spindle 15.

Looking in more detail, the slider 25 has, in radial section, a wedge-shaped portion 25a located between the outside surface of the primary spindle 15 and the control portion 24.

The slider 25 has a pair of flanges 25b, 25c extending radially relative to the longitudinal axis 54 of the primary spindle 15.

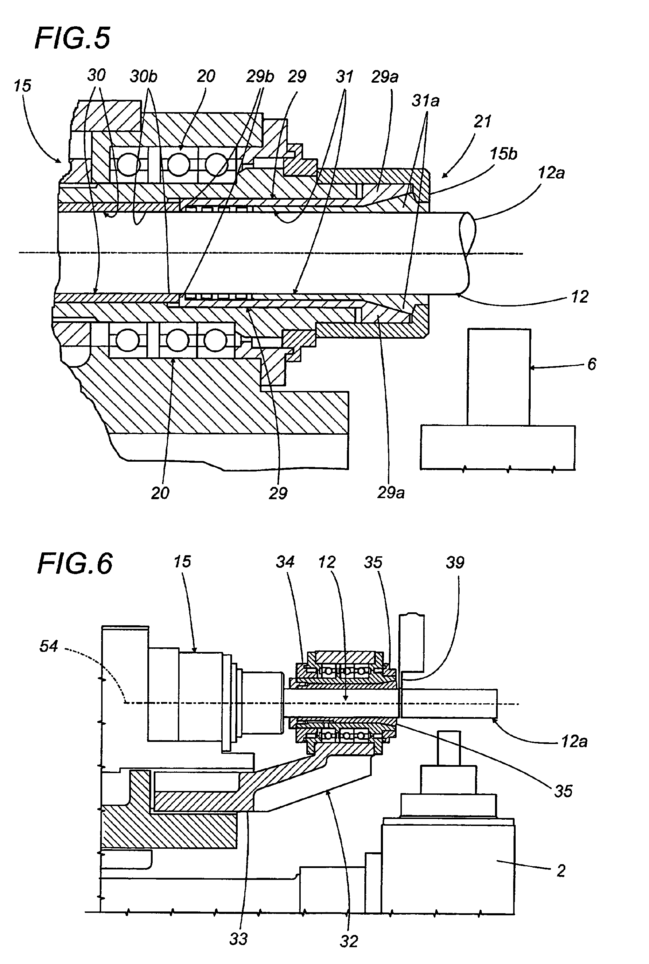

The gripping means 21 further comprise a ring 29 (see Figures 4 and 5), located coaxially inside the primary spindle 15, with a first end 29a located close to the second end 15b of the spindle 15 and having a guide made in it, and with a second end 29b opposite the first end 29a.

The ring 29 is connected to each contact portion 23 of the engagement elements 22 through a cylinder 30.

Looking in more detail, the cylinder 30 is coaxial with the ring 29 and has a first end 30a connected with the contact portion 23 of each engagement element 22, and a second end 30b opposite the first end and connected with the second end 29b of the ring 29.

Inside the ring 29, there is a bush 31 that is in direct contact with the bar 12 and made preferably of a deformable material. The bush 31 has a flared portion 31a that is shaped to match the shape of the guide in the ring 29.

The slider 25 is controlled by a rod 26 extending transversally to the longitudinal axis 54 of tie primary spindle 15 between the flanges 25b, 25c.

The rod 26 has a first end 26a hinged to tie mounting unit 16, and the opposite end rigidly connected to a transmission arm 27 which extends in a direction substantially parallel to the axis 54 of the primary spindle 15.

The transmission arm 27 is in turn engaged with a piston 28 that moves in a direction substantially transversal to the longitudinal axis 54 of the primary spindle 15.

The movement of the piston 28 is transmitted through the transmission arm 27 to the rod 26 which rotates relative to the mounting unit 16 and engages with one of the flanges 25b, 25c.

In this way, the rod 26 acts on the slider 25 to move the control portion 24 and, consequently, to turn each engagement element 22 about its pin in such a way that its contact portion 23 moves close to the bar 12.

The contact portion 23 of each engagement element 22 moves the cylinder 30 and the ring 29 in a direction parallel to the longitudinal axis 54 of the spindle 15.

As a result, the first end 29a with the guide made in it pushes the flared portion 31a of the bush 31 against the bar 12.

The bar 12 is thus locked to the primary spindle 15.

In a second embodiment, illustrated in Figure 6, there is a supporting element 32 that is substantially tubular and coaxial with the primary spindle 15.

The supporting element 32 is designed to support the machinable end 12a when it is very long.

In this case, an additional support is required for the end 12a, which is held at one end only, to prevent it from vibrating transversally to the longitudinal axis 54 while it is being turned by the primary spindle 15.

The supporting element 32 has a long portion 33 attached to the frame 17 of the lathe 14 and bearing a sleeve 34 that is coaxial with the primary spindle 15 and located at the front of the second end 15b.

Inside the sleeve 34, there are secondary gripping means 35 designed to hold the machinable end 12a of the bar 12 according to a direction parallel to the longitudinal extension of the bar 12.

A plurality of bearings enables the bar 12 to rotate about its axis.

The lathe 14 further comprises a tool 36, shown in Figure 3, facing the second end of the primary spindle 15 and designed to machine the machinable end 12a of the bar 12 when the latter protrudes from the second end 15b of the primary spindle 15.

The tool 36 is mounted on a tool holder unit 37. The latter is supported by an upright 38 which is connected to the frame 5 of the machine 1.

The upright 38 is driven by a motor in such a way as to move the tool holder unit 37 from an idle position, where the tool 36 is away from the machinable end 12a of the bar 12, and at least one working position where the tool 36 is close to the machinable end 12a.

Advantageously, the tool holder unit 37 mounts a plurality of tools 36 side by side and extending transversally to the longitudinal extension of the bar 12.

The tools 36 are moved by the upright 38 in two or more directions transversal to the longitudinal extension of the bar 12, depending on the type of work to be done.

Also, the tool holder unit 37 may mount a cutting off tool 39 designed to cut off the machinable end 12a of the bar 12 to make the aforementioned workpiece 7.

Advantageously, in an embodiment that is not illustrated, the cutting off tool 39 is substituted by a circular saw.

In front of the primary spindle 15 in the loading station 10, there is a secondary spindle 40 driven by an electric motor 55 and being substantially tubular.

The secondary spindle 40 is coaxial with the primary spindle 15 and has a first end 40a facing the second end 15b of the primary spindle 15.

The secondary spindle 40 can be driven between an idle condition where it does not engage the bar 12 and a working condition where it engages the machinable end 12a of the bar 12 when the end of the bar is being machined by the cutting off tool 39.

In this situation, the gripping elements 6 on the rotary unit 2 are located between the primary spindle 15 and the secondary spindle 40.

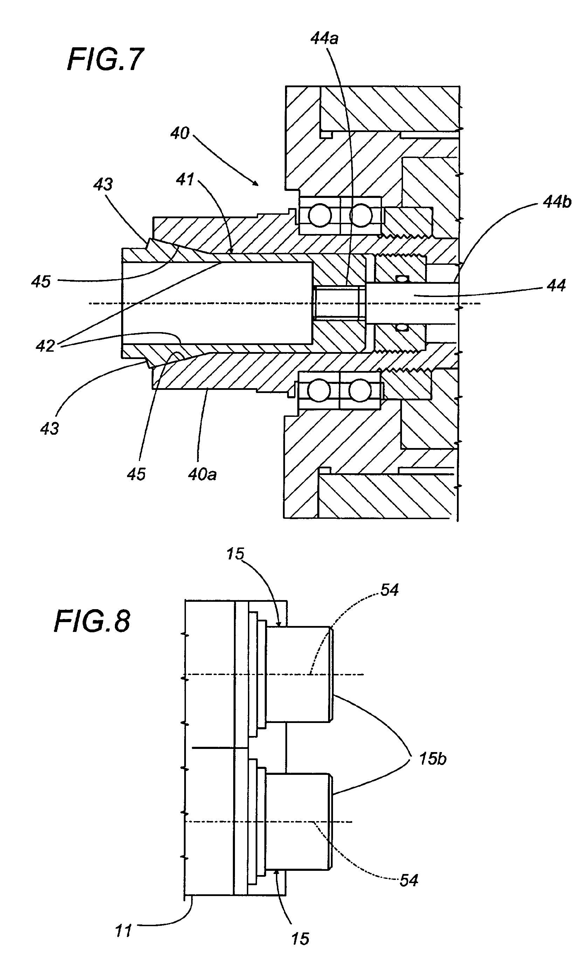

As shown in Figure 7, the secondary spindle 40 further comprises means 41 for gripping the machinable end 12a of the bar 12 when the latter protrudes from the second end 15b of the primary spindle 15.

The gripping means 41 of the secondary spindle 40 comprise an engagement element 42 that is substantially tubular and designed to receive and grip the machinable end 12a.

The engagement element 42 is advantageously made of a deformable material and has at one end a flared sliding portion 43 located close to the end 40a of the secondary spindle 40.

On the side opposite the end of the engagement element 42 with the flared sliding portion 43, there is a transmission shaft 44 extending along the longitudinal axis of the secondary spindle 40.

The transmission shaft 44 has a first end 44a attached to the engagement element 42 and a second end 44b, opposite the first end 44a connected to drive means which are of known type and therefore not described or illustrated in the accompanying drawings.

These drive means move the transmission shaft 44 in a direction corresponding to the longitudinal extension of the transmission shaft 44.

On the outside of the engagement element 42, there extends a fixed portion of the spindle 40 that has a guide 45 which engages with the flared sliding portion 43 of the engagement element 42.

The transmission shaft 44 moves the engagement element 42 in such a way that the flared sliding portion 43 slides on the guide 45, thus deforming the engagement element 42 itself and moving the flared sliding portion 43 in a radial direction towards the longitudinal axis of the secondary spindle 40.

In particular, if the transmission shaft 44 is moved away from primary spindle 15, the engagement element 42 slides on the guide 45, thus closing and engaging the machinable end 12a.

In this situation, the secondary spindle 40 is in the aforementioned working condition.

Instead, if the transmission shaft 44 is moved towards the primary spindle 15, the engagement element 42 is deformed, widening the flared sliding portion 43 and disengaging the machinable end 12a.

In another embodiment, illustrated partly in Figure 8, the machine 1 is fed with a pair of bars 12, side by side. In this embodiment, all the characteristic elements of the machine 1, described above, are doubled.

The feed unit 11 may comprise two tubular bodies 13, each of which has at one end an outlet portion 13a for the machinable end 12a of each of two corresponding bars 12.

In this situation, the lathe 14 has two primary spindles 15, each of which has its first end 15a engaged with the corresponding outlet portion 13a of each of the two tubular bodies 13 and a second end 15b opposite the first end 15a.

The primary spindles 15 have exactly the same characteristics as those described above for the embodiment with a single primary spindle 15.

Each of the two bars 12 is fed by the tubular bodies 13 into the primary spindles 15 from a first feed position where the machinable ends 12a are inside the primary spindles 15, to a second feed position where the machinable ends 12a protrude from the second ends 15b of the primary spindles 15.

The tool holder unit 37 mounts at least two tools 36, each of which faces the second end 15b of the corresponding primary spindle 15 and machines the end 12a of the corresponding bar 12 when the latter protrudes from the primary spindle 15.

In front of the two primary spindles 15 and coaxial with them, there are two secondary spindles 40.

The secondary spindles 40 have exactly the same characteristics as those described above for the embodiment with a single secondary spindle 40.

The operation of the machine according to the invention structured as described above is as follows.

The bar 12 is fed first into the tubular body 13 and then into the primary spindle 15.

The mounting unit 16 is in its second position, that is to say, the rear position, and the machinable end 12a of the bar 12 protrudes from the second end 15b of the spindle 15 (see Figure 4).

In this situation, the gripping means 21 of the primary spindle 15 are moved to the working, engagement where the bar 12 is locked to the primary spindle 15 itself.

In particular, the movable piston 28 acts in conjunction with the transmission arm 27 to drive the rod 26 in such a way as to move the slider 25 towards the engagement elements 22 in the direction parallel to the longitudinal axis of the spindle 15.

The wedge-shaped portion 25a of the slider 25 is thus inserted under the control portion 24 of the engagement element 22 causing the engagement element 22 to turn.

The rotation of each engagement element 22 about its pivot pin brings the contact portion 23 into contact with the bar 12 inside the primary spindle 15.

The contact portions 23 of each engagement element 22 now push the first end 30a of the cylinder 30 towards the second end 15b in a direction parallel to the longitudinal axis of the primary spindle 15. The second end 30b of the cylinder 30 now presses on the second end 29b of the ring 29 to move the ring 29 itself.

The guide made in the ring 29, which is moved towards the second end 15b, slides on the flared portion 31a of the bush 31 deforming it in such a way as to bring it into contact with the outside surface of the bar 12.

Under these conditions, the bar 12 is rigidly connected to the spindle 15 which is thus made to rotate.

The mounting unit 16 moves the primary spindle 15 towards the tool holder unit 37 as far as the second position of the spindle 15 in such a way that the machinable end 12a of the bar 12 moves to the tool 36.

The tool 36 then performs the required operation on the end 12a, moving transversally to the longitudinal axis of the spindle 15.

When the tool 36 has finished machining the end 12a, the secondary spindle 40 moves towards the end to be machined while the electric motor 55 synchronises the secondary spindle 40 with the rotation of the primary spindle 15.

In this way, the machinable end 12a can be inserted into the engagement element 42 of the secondary spindle 40 without interrupting its rotation.

Next, the transmission shaft 44 moves the engagement element 42 away from the primary spindle 15.

The flared sliding portion 43 slides on the guide 45, deforming the engagement element 42 in such a way that it comes into contact with the outside surface of the machinable end 12a and locks the bar 12 to the secondary spindle 40.

The cutting off tool 39 is now moved towards the bar 12 in order to cut off the machinable end 12a, which is now being held by the secondary spindle 40, from the rest of the bar 12, thus forming the workpiece 7.

The gripping means 21 of the primary spindle 15 return to the idle condition in which the bar 12 is disengaged, and the mounting unit 16 is moved back to the second position.

One of the gripping elements 6 now grips the workpiece 7 which is released by the engagement element 42 of the secondary spindle 40. In particular, the transmission shaft 44 returns to the original position, that is to say, close to the primary spindle 15, and the engagement element returns to its starting position, moving away from the outside surface of the machinable end 12a of the bar 12.

The gripping element 6 holding the workpiece 7 is carried by the rotary unit 2 along the machining path 8 to each of the other machining stations 9 which finish machining the workpiece.

Lastly, the workpiece 7 is carried to the last machining station 9 where the workpiece 7 is unloaded.

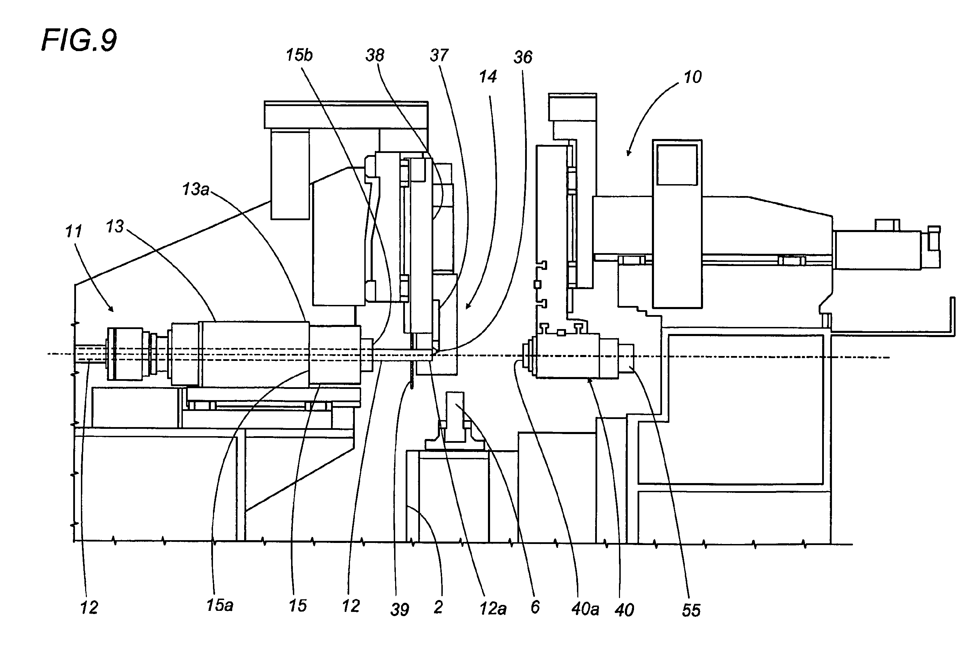

In the alternative embodiment illustrated in Figure 9, the gripping element 6 is carried by the rotary unit 2 to the loading station 10 and is positioned between the primary spindle 15 and the secondary spindle 40 at a level below the common axis 54 of the two spindles.

Advantageously, thanks to this position, the secondary spindle 40 can easily move towards the corresponding gripping element 6 to place the workpiece 7 on the gripping element 6 itself.

The invention achieves significant advantages:-
the time required to produce and turn the workpiece 7 is significantly reduced and
the entire workpiece machining process can be carried out saving considerable amount of space.

## Claims

1. A machine tool of the transfer type comprising:
a frame (5);
- a rotary unit (2) that turns about an axis (3) parallel to the ground and whose rotational motion forms a machining path (8) ;
- a plurality of gripping elements (6) holding at least one workpiece (7), the gripping elements (6) being mounted at the edge of the rotary unit (2);
- a plurality of machining stations (9) located on the machining path (8), at least one of these machining stations (9) being a loading station (10) where the workpiece (7) is clamped by one of the gripping elements (6);
a unit (11) for feeding at least one bar (12), the bar (12) having at least one machinable end (12a), the feed unit (11) carrying the machinable end (12a) to the loading station (10);
at least one lathe (14) provided with at least one, substantially tubular, primary spindle (15), said primary spindle (15) having gripping means (21) for gripping said bar (12), said lathe used to machine the end (12a) of the bar (12) protruding from said primary spindle 15;
at least one cutting off tool (39) located at the loading station (10) and used to cut the end (12a) from the bar (12) in order to make the workpiece (7);
a substantially tubular, secondary spindle (40), located in front of the primary spindle 15, coaxial with said primary spindle (15) according to a common axis (54), further comprising means 4.1 for gripping the machinable end 12a of the bar 12;
the machine tool being **characterised in that**
the gripping elements 6 on the rotary unit 2 are located between the primary spindle 15 and the secondary spindle 40.

2. The machine according to claim wherein
the gripping elements 6 are located at a level below said common axis 54 of the two spindles, and
said secondary spindle 40 is easily movable towards the corresponding gripping element 6 to place the workpiece 7 on the gripping element 6 itself.

3. The machine according to claim 1, wherein
said feed unit (11) comprises:
- at least one tubular body (13) having at one end of it an outlet portion (13a) from which the machinable end (12a) of the bar (12) protrudes, the bar (12) being positioned inside the tubular body (13) according to the longitudinal axis of the body (13) itself; and
- the spindle (15) has a first end (15a) engaged with the outlet portion (13a) of the tubular body (13), and a second end (15b) opposite the first end (15a), the bar (12) being coaxial with the primary spindle (15) and being movable from a first feed position where the machinable end (12a) is inside the primary spindle (15), to a second feed position where the machinable end (12a) protrudes from the second end (15b) of the primary spindle (15) ; and
- at least one tool (36) is provided facing the second end (15b) of the primary spindle (15) and designed to machine the end (12a) of the bar (12) when the latter is in the second feed position.

4. The machine according to claim 1, wherein said secondary spindle (40) is drivable between an idle condition where it does not engage the bar (12) and a working condition where it engages the end (12a) of the bar (12) when the end (12a) is being machined by the cutting off tool (39).

5. The machine according to claim 3, wherein the feed unit (11) comprises:
- two tubular bodies (13) each having at one end an outlet portion (13a) from which the machinable ends (12a) of two corresponding bars (12) protrude, each of the bars (12) being positioned inside the tubular body (13) according to the longitudinal axis of the body (13) itself;
and the lathe (14) comprises:
- two primary spindles (15) each designed to act on one of the bars (12) and being substantially tubular, each of the primary spindles (15) having a first end (15a) engaged with a corresponding outlet portion (13a) of the tubular bodies (13), and a second end (15b) opposite the first end (15a), each bar (12) being coaxial with a corresponding primary spindle (15) and being movable from a first feed position where the machinable ends (12a) are inside the primary spindles (15), to a second feed position where the machinable ends (12a) protrude from the second ends (15b) of the primary spindles (15);
- at least two tools (36) being *provided,* each facing the second end (15b) of a corresponding primary spindle (15) and designed to machine the end (12a) of the bar (12) when the latter is in the second feed position.

6. The machine according to claim 5, further comprising two substantially tubular, secondary spindles (40), each secondary spindle (40) being coaxial with a corresponding primary spindle (15).

7. The machine according to claim 1, wherein the primary spindle (15) comprises means (21) for gripping the bar (12), said gripping means (21) being driven between a working, engaged condition where the bar (12) is locked to the primary spindle (15), and an idle, released condition where the bar (12) can slide inside the primary spindle (15).

8. The machine according to claim 1, wherein the lathe (14) further comprises a mounting unit (16), the primary spindle (15) being mounted on the mounting unit (16), and the unit (16) being movable in a direction parallel to the longitudinal axis (54) of the spindle (15) between a first position where the primary spindle (15) is close to the tool (36), and a second position where the primary spindle (15) is away from the tool (36).

9. The machine according to claim 1, further comprising a supporting element (32) that is substantially tubular and coaxial with the primary spindle (15), said supporting element (32) acting on the bar (12) close to the tool (36) to support the machinable end (12a) of the bar (12) when the end (12a) protrudes from said primary spindle 15.

10. The machine according to claim 1, wherein the lathe (14) further comprises a tool holder unit (37) and a plurality of tools (36) mounted on the tool holder unit (37), said tools (36) extending transversally to the longitudinal extension of the bar (12) and being positioned side by side, the tool holder unit (37) being movable from a first, idle position where none of the tools (36) is close to the machinable end (12a) of the bar (12), and at least a second, working position where at least one of the tools (36) is close to the machinable end (12a) of the bar (12).

11. The machine according to claim 10, wherein the cutting off tool (39) is mounted on the tool holder unit (37).

## Patentansprüche

1. Werkzeugmaschine vom Transfertyp, enthaltend:
- einen Rahmen (5);
- eine Dreheinheit (2), die sich um eine Achse (3) parallel zu dem Boden dreht, und deren Drehbewegung eine Bearbeitungsbahn (8) bildet;
- eine Anzahl von Spannelementen (6), die wenigstens ein Werkstück (7) halten, wobei die Spannelemente (6) an dem Rand der Dreheinheit (2) montiert sind;
- eine Anzahl von Bearbeitungsstationen (9), angeordnet an der Bearbeitungsbahn (8), wobei wenigstens eine dieser Bearbeitungsstationen (9) eine Ladestation (10) ist, in welcher das Werkstück (7) durch eins der Spannelemente (6) festgeklemmt wird;
- eine Einheit (11) zum Zuführen von wenigstens einer Stange (12), wobei die Stange (12) wenigstens ein zu bearbeitendes Ende (12a) hat; wobei die Zuführeinheit (11) das zu bearbeitende Ende (12a) an die Ladestation (10) bringt;
- wenigstens eine Drehbank (14), versehen mit wenigstens einer im wesentlichen rohrförmigen Primärspindel (15), wobei die genannte Primärspindel (15) Spannmittel (21) zum Spannen der genannten Stange (12) hat, und wobei die genannte Drehbank zum Bearbeiten des Endes (12a) der Stange (12) von der genannten Primärspindel (15) hervorsteht;
- wenigstens ein Abtrennwerkzeug (39), angeordnet an der Ladestation (10) und verwendet zum Abtrennen des Endes (12a) von der Stange (12), um ein Werkstück (7) herzustellen;
- eine im wesentlichen rohrförmige Sekundärspindel (40), angeordnet gegenüber der Primärspindel (15) und koaxial mit der genannten Primärspindel (15) nach einer gemeinsamen Achse (54), und ausserdem enthaltend Mittel (41) zum Spannen des zu bearbeitenden Endes (12a) der Stange (12);
wobei die Werkzeugmaschine **dadurch gekennzeichnet ist, dass** die Spannelemente (6) an der Dreheinheit (2) zwischen der Primärspindel (15) und der Sekundärspindel (40) angeordnet sind.

2. Maschine nach Patentanspruch 1, bei welcher die Spannelemente (6) auf einer Höhe unterhalb der genannten gemeinsamen Achse (54) der beiden Spindeln angeordnet sind und die genannte Sekundärspindel (40) leicht zu dem entsprechenden Spannelement (6) hin beweglich ist, um das Werkstück (7) an dem Spannelement (6) selbst anzuordnen.

3. Maschine nach Patentanspruch 1, bei welcher die genannte Zuführeinheit (11):
- wenigstens einen rohrförmigen Körper (13) enthält, der an einem Ende einen Austrittsabschnitt (13a) hat, aus welchem das zu bearbeitende Ende (12a) der Stange (12) hervorsteht, wobei die Stange (12) im Inneren des rohrförmigen Körpers (13) nach der Längsachse des Körpers (13) selbst positioniert ist;
- die Spindel (15) ein erstes Ende (15a) hat, verbunden mit dem Austrittsabschnitt (13a) des rohrförmigen Körpers (13), und ein zweites Ende (15b) entgegengesetzt von dem ersten Ende (15a), wobei die Stange (12) koaxial mit der Primärspindel (15) ist, und wobei sie beweglich ist aus einer ersten Zuführposition, in welcher sich das zu bearbeitende Ende (12a) im Inneren der Primärspindel (15) befindet, in eine zweite Zuführposition, in welcher das zu bearbeitende Ende (12a) aus dem zweiten Ende (15b) der Primärspindel (15) hervorsteht; und
- wenigstens ein Werkzeug (36) vorgesehen ist, zugewandt dem zweiten Ende (15b) der Primärspindel (15) und dazu bestimmt, das Ende (12a) der Stange (12) zu bearbeiten, wenn letztere sich in der zweiten Zuführposition befindet.

4. Maschine nach Patentanspruch 1, bei welcher die genannte Sekundärspindel (40) anzutreiben ist zwischen einem Ruhezustand, in welchem sie nicht die Stange (12) greift, und einem Arbeitszustand, in welchem sie das Ende (12a) der Stange (12) greift, wenn das Ende (12a) durch das Abtrennwerkzeug (39) bearbeitet wird.

5. Maschine nach Patentanspruch 3, bei welcher die Zuführeinheit (11) enthält:
- zwei rohrförmige Körper (13), von welchen jeder an einem Ende einen Austrittabschnitt (13a) hat, aus welchen die zu bearbeitenden Enden (12a) von zwei entsprechenden Stangen (12) hervorstehen, wobei jede der beiden Stangen (12) im Inneren des rohrförmigen Körpers (13) nach der Längsachse des Körpers (13) selbst positioniert ist;
und bei welcher die Drehbank (14) enthält:
- zwei Primärspindeln (15), jede dazu bestimmt, auf eine der Stangen (12) zu wirken, und die im wesentlichen rohrförmig sind, wobei jede der Primärspindeln (15) ein erstes Ende (15a) hat, im Eingriff mit einem entsprechenden Austrittsabschnitt (13a) der rohrförmigen Körper (13), und ein zweites Ende (15b), entgegengesetzt von dem ersten Ende (15a), wobei jede Stange (12) koaxial mit einer entsprechenden Primärspindel (15) ist, und wobei beweglich ist aus einer ersten Zuführposition, in welcher sich die zu bearbeitenden Enden (12a) im Inneren der Primärspindeln (15) befinden, in eine zweite Zuführposition, in welcher die zu bearbeitenden Enden (12a) von den zweiten Enden (15b) der Primärspindeln (15) hervorstehen;
- wobei wenigstens zwei Werkzeuge (36) vorgesehen sind, jedes dem zweiten Ende (15b) einer entsprechenden Primärspindel (15) zugewandt und dazu bestimmt, das Ende (12a) der Stange (12) zu bearbeiten, wenn letztere sind in der zweiten Zuführposition befindet.

6. Maschine nach Patentanspruch 5, weiter enthaltend zwei im wesentlichen rohrförmige Sekundärspindeln (40), wobei jede Sekundärspindel (40) koaxial mit einer entsprechenden Primärspindel (15) ist.

7. Maschine nach Patentanspruch 1, bei welcher die Primärspindel (15) Mittel (21) zum Spannen der Stange (12) enthält, wobei die genannten Spannmittel (21) zwischen einem Arbeits- oder Eingriffszustand, in welchem die Stange (12) an der Primärspindel (15) gespannt ist, und einem Ruhe- oder Freigabezustand angetrieben ist, in welchem die Stange (12) im Inneren der Primärspindel (15) gleiten kann.

8. Maschine nach Patentanspruch 1, bei welcher die Drehbank (14) ausserdem eine Trägereinheit (16) enthält, wobei die Primärspindel (15) an der Trägereinheit (16) montiert ist, und wobei die Einheit (16) beweglich ist in einer Richtung parallel zu der Längsachse (54) der Spindel (15) zwischen einer ersten Position, in welcher die Primärspindel (15) sich dicht an dem Werkzeug (36) befindet, und einer zweiten Position, in welcher die Primärspindel (15) von dem Werkzeug (36) entfernt ist.

9. Maschine nach Patentanspruch 1, ausserdem enthaltend ein Halteelement (32), das im wesentlichen rohrförmig und koaxial mit der Primärspindel (15) ist, wobei das genannte Halteelement (32) dicht an dem Werkzeug (36) auf die Stange (12) wirkt, um das zu bearbeitende Ende (12a) der Stange (12) zu stützen, wenn das Ende (12a) aus der genannten Primärspindel (15) hervorsteht.

10. Maschine nach Patentanspruch 1, bei welcher die Drehbank (14) ausserdem eine Werkzeughaltereinheit (37) enthält, sowie eine Anzahl von Werkzeugen (36), montiert an der Werkzeughaltereinheit (37), wobei die genannten Werkzeuge (36) sich quer zu der Längenausdehnung der Stange (12) erstrecken und Seite an Seite angeordnet sind, und wobei die Werkzeughaltereinheit (37) beweglich ist zwischen einer ersten Ruheposition, in welcher sich keins der Werkzeuge (36) dicht an dem zu bearbeitenden Ende (12a) der Stange (12) befindet, und wenigstens einer zweiten Arbeitsposition, in welcher wenigstens eins der Werkzeuge (36) sich dicht an dem zu bearbeitenden Ende (12a) der Stange (12) befindet.

11. Maschine nach Patentanspruch 10, bei welcher das Abtrennwerkzeug (39) an der Werkzeughaltereinheit (37) montiert ist.

## Revendications

1. Une machine-outil de transfert comprenant :
- un châssis (5) ;
- un groupe rotatif (2) qui tourne autour d'un axe (3) parallèle au sol et dont le mouvement de rotation définit un parcours d'usinage (8) ;
- une pluralité d'éléments de prise (6) pour le blocage d'au moins une pièce à usiner (7), les éléments de prise (6) étant montés au niveau du bord du groupe rotatif (2) ;
- une pluralité de stations d'usinage (9) situées sur le parcours d'usinage (8), au moins une de ces stations d'usinage (9) étant une station de chargement (10) où la pièce à usiner (7) est bloquée par un des éléments de prise (6) ;
- un groupe (11) destiné à alimenter au moins une barre (12), la barre (12) ayant au moins une extrémité usinable (12a); le groupe d'alimentation (11) amenant l'extrémité usinable (12a) au niveau de la station de chargement (10) ;
- au moins un tour (14) équipé d'au moins un mandrin principal (15) essentiellement tubulaire, ledit mandrin principal (15) comportant des moyens de prise (21) pour le blocage de ladite barre (12), ledit tour étant utilisé pour usiner l'extrémité (12a) de la barre (12) dépassant dudit mandrin principal (15) ;
- au moins un outil de coupe (39), situé au niveau de la station de chargement (10) et utilisé pour couper l'extrémité (12a) de la barre (12) afin d'obtenir la pièce à usiner (7) ;
- un second mandrin auxiliaire (40) essentiellement tubulaire, situé en face du mandrin principal (15) et coaxial à ce dernier suivant un axe commun (54), et comprenant en outre des moyens (41) pour le blocage de l'extrémité usinable (12a) de la barre (12) ;
la machine-outil étant **caractérisée en ce que** les éléments de prise (6) du groupe rotatif (2) sont situés entre le mandrin principal (15) et le mandrin auxiliaire (40).

2. La machine selon la revendication 1, **caractérisée en ce que** les éléments de prise (6) sont situés à un niveau inférieur par rapport audit axe commun (54) des deux mandrins, et **en ce que** ledit mandrin auxiliaire (40) peut aisément se déplacer vers l'élément de prise (6) correspondant pour placer la pièce à usiner (7) sur l'élément de prise (6) lui-même.

3. La machine selon la revendication 1, **caractérisée en ce que** ledit groupe d'alimentation (11) comprend :
- au moins un corps tubulaire (13) présentant, à une de ses extrémités, une portion de sortie (13a) de laquelle dépasse l'extrémité usinable (12a) de la barre (12), la barre (12) en question étant positionnée à l'intérieur du corps tubulaire (13) selon l'axe longitudinal du corps (13) lui-même ;
et
- le mandrin (15) présente une première extrémité (15a) en prise avec la portion de sortie (13a) du corps tubulaire (13) ainsi qu'une seconde extrémité (15b) opposée à la première extrémité (15a), la barre (12) étant coaxiale au mandrin principal (15) et étant mobile d'une première position d'alimentation dans laquelle l'extrémité usinable (12a) est à l'intérieur du mandrin principal (15), à une seconde position d'alimentation dans laquelle l'extrémité usinable (12a) dépasse de la seconde extrémité (15b) du mandrin principal (15) ; et
- au moins un outil (36) est prévu en face de la seconde extrémité (15b) du mandrin principal (15) pour usiner l'extrémité (12a) de la barre (12) quand cette dernière est dans la seconde position d'alimentation.

4. La machine selon la revendication 1, **caractérisée en ce que** ledit mandrin auxiliaire (40) peut être piloté entre une condition non opérationnelle dans laquelle il n'assujettit pas la barre (12), et une condition opérationnelle dans laquelle il assujettit l'extrémité (12a) de la barre (12) quand l'extrémité (12a) est usinée par l'outil de coupe (39).

5. La machine selon la revendication 3, **caractérisée en ce que** le groupe d'alimentation (11) comprend :
- deux corps tubulaires (13) présentant chacun, à une extrémité, une portion de sortie (13a) de laquelle dépassent les extrémités usinables (12a) de deux barres (12) correspondantes, chacune des barres (12) étant positionnée à l'intérieur du corps tubulaire (13) selon l'axe longitudinal du corps (13) lui-même ;
et le tour (14) comprend :
- deux mandrins principaux (15) destinés chacun à agir sur une des barres (12) et étant essentiellement tubulaires, chacun des mandrins principaux (15) ayant une première extrémité (15a) en prise avec une portion de sortie (13a) correspondante des corps tubulaires (13) ainsi qu'une seconde extrémité (15b) opposée à la première extrémité (15a), chaque barre (12) étant coaxiale à un mandrin principal (15) correspondant et étant mobile d'une première position d'alimentation dans laquelle les extrémités usinables (12a) sont à l'intérieur des mandrins principaux (15), à une seconde position d'alimentation dans laquelle les extrémités usinables (12a) dépassent des secondes extrémités (15b) des mandrins principaux (15) ;
- au moins deux outils (36) étant prévus, chacun en face de la seconde extrémité (15b) d'un mandrin principal (15) correspondant, pour usiner l'extrémité (12a) de la barre (12) quand cette dernière est dans la seconde position d'alimentation.

6. La machine selon la revendication 5, **caractérisée en ce qu'**elle comprend en outre deux mandrins auxiliaires (40) essentiellement tubulaires, chaque mandrin auxiliaire (40) étant coaxial à un mandrin principal (15) correspondant.

7. La machine selon la revendication 1, **caractérisée en ce que** le mandrin principal (15) comprend des moyens (21) pour le blocage de la barre (12), lesdits moyens de prise (21) étant pilotés entre une condition opérationnelle de blocage dans laquelle la barre (12) est assujettie au mandrin principal (15), et une condition non opérationnelle de déblocage dans laquelle la barre (12) peut coulisser à l'intérieur du mandrin principal (15).

8. La machine selon la revendication 1, **caractérisée en ce que** le tour (14) comprend en outre un groupe de support (16), le mandrin principal (15) étant monté sur le groupe de support (16), et le groupe (16) lui-même étant mobile dans une direction parallèle à l'axe longitudinal (54) du mandrin (15) entre une première position dans laquelle le mandrin principal (15) est à proximité de l'outil (36), et une seconde position dans laquelle le mandrin principal (15) est éloigné de l'outil (36).

9. La machine selon la revendication 1, **caractérisée en ce qu'**elle comprend en outre un élément de support (32) qui est essentiellement tubulaire et coaxial au mandrin principal (15), ledit élément de support (32) agissant sur la barre (12) à proximité de l'outil (36) pour supporter l'extrémité usinable (12a) de la barre (12) quand l'extrémité (12a) dépasse dudit mandrin principal (15).

10. La machine selon la revendication 1, **caractérisée en ce que** le tour (14) comprend en outre un groupe porte-outils (37) et une pluralité d'outils (36) montés sur le groupe porte-outils (37) en question, lesdits outils (36) s'étendant transversalement par rapport au développement longitudinal de la barre (12) et étant positionnés les uns à côté des autres, le groupe porte-outils (37) étant mobile d'une première position, non opérationnelle, dans laquelle aucun des outils (36) n'est à proximité de l'extrémité usinable (12a) de la barre (12), et au moins une deuxième position, opérationnelle, dans laquelle au moins un des outils (36) est à proximité de l'extrémité usinable (12a) de la barre (12).

11. La machine selon la revendication 10, **caractérisée en ce que** l'outil de coupe (39) est monté sur le groupe porte-outils (37).
